# FASCICULE DE BREVET EUROPEEN

(11) **EP 2 635 449 B1**
(45) Date de publication et mention de la délivrance du brevet: **20.08.2014**
(21) Numéro de dépôt: 11781510.0
(22) Date de dépôt: 04.11.2011
(51) Int. Cl.: B60G 21/05, B60B 35/02, B62D 65/02, F16B 11/00, F16B 7/04

(54) **ESSIEU SOUPLE POUR VEHICULE AUTOMOBILE EN PARTIE COLLE**
TEILHAFTENDE FLEXIBLE ACHSE FÜR EIN KRAFTFAHRZEUG
PARTIALLY ADHERED FLEXIBLE AXLE FOR A MOTOR VEHICLE

(30) Priorité: 05.11.2010 FR 1059171
(43) Date de publication de la demande: 11.09.2013
(73) Titulaire: Renault S.A.S., 92100 Boulogne-Billancourt (FR)
(72) Inventeur: DHONT, Sébastien, F-72650 La Bazoge (FR); DUBE, Emmanuel, F-72220 Laigne-en-Belin (FR); PATIGNIEZ, Alain, F-72380 Sainte-Jamme-sur-Sarthe (FR)
(86) Numéro de dépôt international: PCT/EP2011/069470
(87) Numéro de publication internationale: WO 2012/059597

(56) Documents cités:
- EP-A2- 1 036 680
- EP-A2- 2 078 870
- WO-A1-2006/042988
- WO-A1-2008/055958
- DE-A1- 3 636 878
- DE-A1- 19 542 523
- FR-A1- 2 888 559
- FR-A1- 2 944 736
- US-A- 5 800 024

## Description

La présente invention concerne un essieu souple pour véhicule automobile.

On entend par essieu « souple » un essieu conçu de manière à former un élément torsible entre deux roues d'un même train du véhicule automobile.

Un tel essieu souple est généralement constitué de deux bras longitudinaux reliés par une traverse. Les bras relient la caisse aux supports de roues et reçoivent aussi l'appui d'éléments de suspension, des butées de choc et la fixation des amortisseurs. La traverse assure les raideurs en flexion de l'essieu (pince et carrossage) et la raideur en torsion (antiroulis).

Les essieux souples présentent une forte raideur en flexion et une relative souplesse en torsion, par une section généralement en V ou en U à partir d'une forme tubulaire.

Traditionnellement, les essieux collés sont assemblés par emmanchement des extrémités de la traverse dans des logements préalablement usinés dans les bras, l'assemblage ainsi constitué étant souvent renforcé par soudure.

Cependant, la qualité du collage est mal maîtrisée, essentiellement à cause du procédé d'assemblage par emmanchement. L'assemblage est donc souvent imparfait et compliqué à mettre en place sur la chaine de montage. En effet, les contraintes à prendre en compte dans le cas d'un assemblage collé sont les suivantes :
- L'assemblage collé de la traverse aux bras impose de respecter une géométrie d'assemblage très précise. Les fabricants de colle demandent des épaisseurs de joint de colle comprises entre 0,3 mm et 0,7 mm.
- Les formes de la traverse étant issues d'opérations de formage et de traitement thermique, leurs dispersions sont importantes. Dans le cas d'extrémités oblongues, plutôt que cylindriques, ces dispersions sont accentuées par l'ajout du défaut de vrillage entre les deux extrémités de la traverse.
- Le formage des extrémités oblongues est plus complexe que de conserver des extrémités cylindriques et induit des dispersions de forme plus importantes.

Une conception classique consisterait à insérer la traverse dans des logements oblongs crées dans les bras. Du coup, en prenant en compte les dispersions dimensionnelles des extrémités de la traverse pour définir l'usinage des logements dans les bras, il en résulte des risques forts d'obtenir des épaisseurs de joint de colle très largement supérieures aux préconisations des fabricants (de l'ordre de 1,5 mm).

De plus, du fait que chaque extrémité de la traverse est déplacée axialement pour entrer dans le logement du bras correspondant, les défauts de formes et les faibles jeux de collage ont pour effet de racler la colle pendant l'assemblage. Du coup, le résultat obtenu n'est pas robuste. Il existe des risques importants d'avoir des zones non collées, la colle se trouvant dans certains cas repoussée au fond du logement.

En l'état, l'utilisation d'une traverse à extrémités oblongues, chacune collée à un bras, dont le logement oblong « femelle » est réalisé, par exemple, par usinage, ne permet pas d'obtenir un assemblage collé suffisamment robuste : il risque d'y avoir une épaisseur de colle trop importante vis-à-vis des efforts à transmettre, ou inversement, ou encore des manques de colle liés au raclage lors de l'assemblage.

L'objectif est de développer un essieu capable, non seulement de répondre au cahier des charges traditionnel, mais dont l'assemblage permettrait d'éviter tout ou partie des inconvénients ci-dessus.

On connaît par exemple, le brevet allemand DE 36 36 878 relatif à un essieu souple de train arrière d'un véhicule automobile, comportant notamment une traverse montée sur les bras de l'essieu. Selon l' exemple de réalisation, les extrémités de la traverse sont couverts avec une couche mince élastique qui permet un mouvement insignifiant entre une traverse et un bras avec des surfaces imparfaits à leurs régions de fixation.

On connait par exemple, le brevet américain US 5 800 024 relatif à un essieu souple de train arrière d'un véhicule automobile, comportant notamment une traverse en aluminium montée sur des bras de contrôle. Selon un des exemples de réalisation, la traverse cylindrique vient se fixer par collage dans une forme complémentaire dans le bras à l'aide d'une pièce intermédiaire.

On connait aussi le brevet allemand DE 195 42 523 qui divulgue une connexion entre des bras et une traverse. Les bras possèdent un logement non débouchant pouvant accueillir des manchons cylindriques soudés sur la traverse, les manchons étant tout d'abord collés dans les logements des bras. Cette connexion par collage et soudage augmente le coût de réalisation.

On connait encore le brevet allemand DE 197 52 347 concernant un assemblage par collage entre une traverse et des éléments latéraux à chaque extrémité de la traverse. Une ouverture permet l'introduction de la colle. Par ailleurs, une connexion mécanique est adjointe à l'assemblage par collage, par un vissage ou un rivetage.

Enfin, on connait le brevet européen EP 1 036 680 décrivant un essieu pour véhicule automobile, comprenant deux bras, présentant chacun un logement recevant une des deux extrémités d'une traverse, l'assemblage de la traverse et des bras étant obtenu par collage. Une partie de l'invention porte sur la réalisation de fentes annulaires entre les extrémités de la traverse et les logements, ces fentes étant remplies de colle. Un des modes de réalisation présente une déformation mécanique ultérieure de la zone collée afin de renforcer la tenue mécanique.

Aucun de ces documents ne divulgue donc un essieu dont la conception permette de pallier les inconvénients précités.

A cet effet est proposé, un essieu souple comportant :
■ au moins un premier bras, adapté à relier la caisse à un support de roue
■ une traverse présentant au moins une première extrémité, apte à être collée avec le premier bras,
ledit bras, apte à être assemblé par collage, présentant plusieurs parties qui, réunies entre elles selon une première direction transversale à l'axe longitudinal de la traverse, définissent un logement de forme essentiellement complémentaire de celle de ladite première extrémité de la traverse qu'il reçoit. On entend par « direction transversale », une direction qui coupe l'axe longitudinal de la traverse, pas nécessairement de façon orthogonale.

Selon l'invention, la traverse est apte à être déposée dans les logements préalablement encollés. Ainsi, on limite les risques de raclage de colle qui se produisaient généralement lors de l'emmanchement de la traverse, et la qualité du collage est mieux maitrisée. Un contrôle visuel est aussi possible.

La colle est alors répartie de façon plus homogène sur toutes les surfaces de contact entre les différentes parties du bras définissant le logement et la traverse, ce qui rend l'assemblage plus robuste.

Selon un mode avantageux de réalisation, la première extrémité de la traverse présente une forme sans contre-dépouille. De préférence, la forme de la première extrémité de la traverse est sensiblement oblongue, permettant de faciliter la connexion tout en favorisant la répartition des efforts.

Selon un mode avantageux de réalisation, les parties dudit premier bras qui définissent le logement sont fixées entre elles par des éléments de serrage, qui sont de préférence, des vis. En outre, les parties dudit premier bras qui définissent le logement, voire les vis, sont aptes à être fixées à la traverse par collage.

On sécurise ainsi l'assemblage en favorisant le collage par un contact mieux garanti. Les défauts de forme de la traverse et des logements qui peuvent exister, ainsi que les faibles jeux de collage, sont alors compensés lors du serrage (ou vissage) des différentes parties qui définissent les logements, tout en respectant les préconisations des fabricants concernant les épaisseurs de colles.

Avantageusement, au moins la première extrémité de la traverse est collée avec au moins une partie du premier bras de l'essieu.

Selon un mode avantageux de réalisation, le premier bras présente deux parties en berceau formant le logement de la première extrémité de la traverse.

De préférence, la traverse présente deux extrémités identiques, et la deuxième extrémité de la traverse est liée à un deuxième bras de la même manière que la première extrémité de la traverse est liée au premier bras.

Selon un mode avantageux de réalisation, la traverse, excepté ses extrémités, présente une section génératrice sensiblement en V, permettant de renforcer la rigidité de la traverse.

Est également ici concerné un procédé d'assemblage d'un essieu comportant :
■ une traverse présentant au moins une première extrémité,
■ au moins un premier bras présentant plusieurs parties qui, réunies entre elles selon une première direction transversale à l'axe longitudinal de la traverse, définissent un logement de forme essentiellement complémentaire de celle de la première extrémité de la traverse qu'il reçoit,
ledit procédé comportant :
- une étape de positionnement lors de laquelle on positionne et on maintient une première partie dudit premier bras définissant le logement ;
- une étape d'encollage lors de laquelle on enduit de colle la surface de ladite première partie dudit premier bras positionné destinée à établir un contact avec ladite première extrémité de la traverse ;
- une étape durant laquelle on positionne ladite première extrémité de la traverse au contact de ladite première partie dudit premier bras encollée ;
- une autre étape d'encollage lors de laquelle on enduit de colle la surface des autres parties dudit premier bras qui définissent le logement de ladite première extrémité de la traverse ;
- une étape d'assemblage durant laquelle on positionne ensemble les parties dudit premier bras qui définissent le logement ;
- une étape de serrage durant laquelle on serre les différentes parties dudit premier bras qui définissent le logement contre ladite première extrémité de la traverse.

La machinerie d'assemblage est simplifiée et moins couteuse car, selon un mode préférentiel de réalisation, il est alors possible de positionner et coller les deux extrémités de la traverse en même temps et il n'est pas nécessaire d'avoir un système pour emmancher latéralement la traverse dans le premier bras et un système pour emmancher le deuxième bras sur la traverse.

Avantageusement, l'on encolle également au moins la première extrémité de la traverse avant l'étape d'assemblage.

Selon un mode avantageux d'assemblage, l'on vient poser en appui la première extrémité de la traverse sur la première partie du logement. En effet, il est avantageux que la première extrémité de la traverse soit posée en appui dans la première partie du logement pour ne pas avoir à maintenir séparément la traverse et la première partie du logement pour les mettre en contact.

En outre, du fait que les bras sont maintenus rigidement et en position dans le montage d'assemblage, la géométrie résultante de l'essieu est améliorée.

De préférence, l'on serre les différentes parties dudit premier bras qui définissent le logement contre la première extrémité de la traverse grâce à des vis.

Selon un autre mode avantageux d'assemblage, une deuxième extrémité de la traverse est assemblée à un deuxième bras selon le même mode de réalisation.

De préférence, l'on assemble la première extrémité de la traverse selon le procédé décrit précédemment en même temps qu'une deuxième extrémité de la traverse.

Enfin, est ici concerné un véhicule automobile qui comprend un essieu souple tel que décrit précédemment.

L'invention, selon un mode préférentiel de réalisation, sera bien comprise et ses avantages apparaîtront mieux à la lecture de la description détaillée qui suit, à titre indicatif et nullement limitatif, et en référence aux dessins annexés présentés ci-après :
- la figure 1 présente une vue éclatée de l'assemblage.
- la figure 2 représente l'ensemble des éléments constituant l'essieu une fois assemblés ;

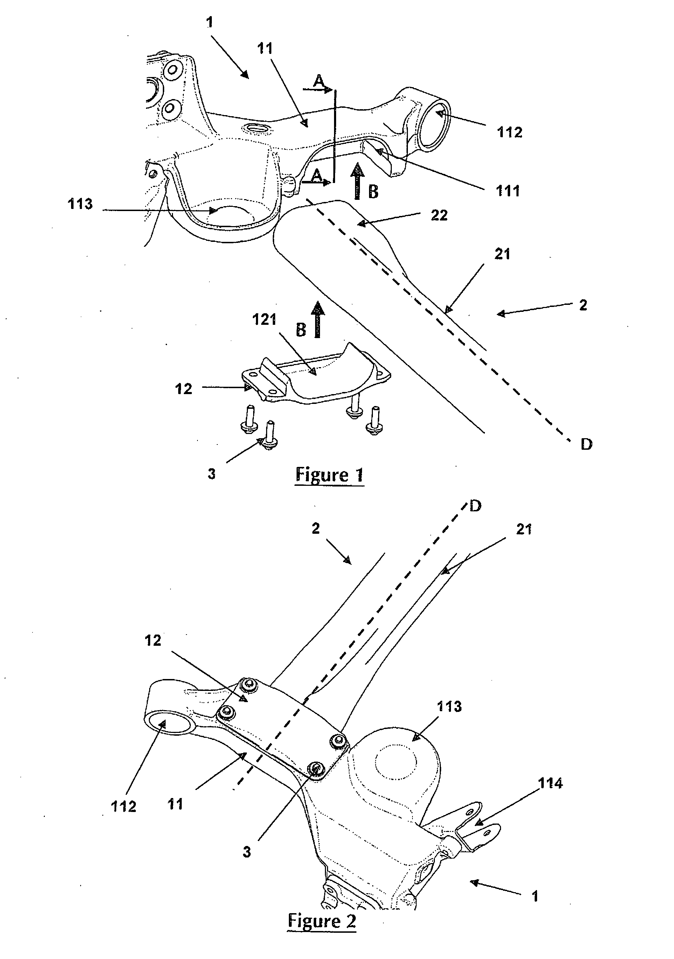

Les éléments identiques représentés sur les figures 1 et 2 sont identifiés par des références numériques identiques.

L'essieu représenté en partie est constitué :
- d'un bras 1, adapté à relier la caisse aux supports de roue,
- d'une traverse 2 apte à être fixée avec le bras 1.

De préférence, le bras 1 est une pièce de fonderie en aluminium. Le bras 1 peut, par exemple, être obtenu par moulage.

De préférence, la traverse 2 est en acier ou en composites. Elle peut être obtenue par extrusion et emboutissage. En fonction des sollicitations qu'elle subit, elle peut aussi recevoir un traitement thermique ou un grenaillage.

Ainsi les matériaux et procédés de mise en forme choisis permettent de faire en sorte que l'essieu répond au cahier des charges traditionnel.

En l'occurrence, la traverse 2 est essentiellement formée d'un cylindre 21 embouti afin d'obtenir une section génératrice sensiblement en « V », tel qu'il est connu dans le domaine.

De préférence, l'extrémité 22 de la traverse 2 présente une forme sans contre dépouille, afin d'éviter, par exemple, des épaisseurs de colle différentes dans la zone d'assemblage, pouvant fragiliser la liaison. En l'occurrence, l'extrémité 22 est de forme oblongue, ce qui permet notamment de faciliter la connexion tout en favorisant la répartition des efforts.

Le bras 1 présente plusieurs parties (11, 12) qui, réunies entre elles selon une première direction B transversale à l'axe longitudinal D de la traverse 2, définissent un logement de forme essentiellement complémentaire de celle de l'extrémité 22 de la traverse 2 qu'il reçoit.

Selon l'exemple préférentiel de réalisation représenté, le bras 1 de l'essieu est constitué de deux parties :
- un corps 11 comportant une première partie du logement 111,
- un couvercle 12 comportant une deuxième partie du logement 121.

Le corps 11 est la plus grosse partie du bras qui constitue le logement. Outre la partie 111 du logement de traverse, le corps 11 comprend des éléments de liaison à d'autres éléments fonctionnels, comme, par exemple, un appui 113 des ressorts de suspension et des butées de choc, une liaison 112 entre l'essieu et le châssis, et une fixation d'amortisseur 114.

Selon le présent exemple de réalisation, la première partie du logement 111 représente sensiblement la moitié du logement complet, et la deuxième partie du logement 121, formée par le couvercle 12, représente l'autre moitié.

La direction de l'assemblage peut toutefois être différente. Par exemple, le bras 1 peut être coupé verticalement au droit de la traverse 2, i.e. par exemple selon l'axe A-A.

En effet, le fait que les différentes parties du bras 1 définissant le logement (111, 121) soient assemblées selon un plan de symétrie du logement permet de faciliter l'accostage de l'extrémité 22 de la traverse 2.

Les différentes parties (111, 121) du logement dans lesquelles vient se positionner l'extrémité 22 de la traverse 2 sont, par exemple, usinées dans le bras. Elles peuvent également provenir du moulage des pièces.

L'assemblage des différentes parties (11, 12) du bras 1 définissant le logement (111, 121), et de la traverse 2 se fait par collage.

Pour assembler un essieu tel que représenté, il convient donc d'enduire de colle soit la surface du logement 111 soit le pourtour de l'extrémité 22 de la traverse 2, soit les deux, et de venir positionner l'extrémité 22 de la traverse 2 dans le logement 111 du corps 11 du bras 1, le corps 1 étant disposé, de préférence, sous l'extrémité de la traverse, comme le montre la figure 2. Cette disposition est avantageuse, car l'extrémité 22 de la traverse 2 peut alors être posée en appui dans le logement 111.

En outre, cette disposition permet d'assembler la première extrémité (22) de la traverse (2) en même temps qu'une deuxième extrémité de la traverse (2) et selon le même mode d'assemblage.

Ensuite, le reste de la surface de l'extrémité 22 de la traverse 2 et/ou la surface du logement 121 du couvercle 12 est enduit de colle et le couvercle est positionné de sorte à refermer le logement (111, 121).

Ce procédé permet, plus aisément, de respecter les préconisations des fabricants concernant les épaisseurs de colle à appliquer.

Une fois assemblées, les différentes parties du bras 1 sont fixées entre elles par des éléments de serrage.

En l'occurrence, des vis 3 sont ajoutées pour serrer l'assemblage et favoriser la transmission des efforts entre les parties avant et arrière du corps 11 du bras 1 et pour assurer une pression dans l'assemblage collé entre les différentes parties du logement (111, 112) et l'extrémité 22 de la traverse 2.

Si l'assemblage collé n'est pas soumis à de fortes sollicitations en fonctionnement, alors les vis 3 peuvent être supprimées. Néanmoins, au moment du collage des différentes parties du bras 1 définissant le logement, il est nécessaire d'exercer une pression pour garantir le collage.

Par ailleurs, certaines parties du bras définissant le logement peuvent comprendre des renforts. Par exemple, le couvercle 12 peut présenter sur sa face externe des renforts. En effet, le serrage des différentes parties définissant le logement lors du collage engendre des déformations, donc des contraintes qui viennent s'ajouter à celles dues au fonctionnement de l'essieu.

L'invention permet également, outre les avantages sur la qualité et la fiabilité de la liaison collée entre la traverse et les bras, tel qu'il vient d'être évoqué, de simplifier le dispositif d'assemblage car les deux côtés de la traverse sont collés en même temps. De plus, le procédé de collage évite l'utilisation de système pour emmancher latéralement la traverse dans le premier bras et un système équivalent pour emmancher le second bras dans l'autre extrémité de la traverse.

Par ailleurs, du fait que les bras sont maintenus rigidement et en position dans le montage d'assemblage, la géométrie résultante de l'essieu collé est améliorée.

Naturellement, diverses variantes sont possibles sans toutefois sortir du cadre de l'invention. Par exemple, le même problème peut se poser pour d'autres éléments constitutifs d'une automobile comprenant une traverse et deux éléments latéraux, auxquels une solution analogue peut être appliquée.

## Revendications

1. Essieu souple comportant :
■ au moins un premier bras (1), adapté à relier la caisse à un support de roue,
■ une traverse (2) présentant au moins une première extrémité (22),
ledit bras (1) présentant plusieurs parties qui, réunies entre elles selon une première direction transversale à l'axe longitudinal de la traverse, définissent un logement de forme essentiellement complémentaire de celle de ladite première extrémité (22) de la traverse (2) qu'il reçoit, **caractérisé en ce que** la première extrémité (22) de la traverse (2) est collée avec au moins une partie dudit premier bras (1).

2. Essieu souple selon la revendication 1, **caractérisé en ce que** la première extrémité (22) de la traverse (2) présente une forme sans contre-dépouille.

3. Essieu souple selon l'une quelconque des revendications 1 ou 2, **caractérisé en ce que** la forme de la première extrémité (22) de la traverse (2) est sensiblement oblongue.

4. Essieu souple selon l'une quelconque des revendications 1 à 3, **caractérisé en ce que** les parties dudit premier bras (1) qui définissent le logement sont fixées entre elles par des éléments de serrage.

5. Essieu souple selon l'une quelconque des revendications 1 à 4, **caractérisé en ce que** les parties dudit premier bras (1) qui définissent le logement sont fixées entre elles par des vis (3).

6. Essieu souple selon l'une quelconque des revendications précédentes, **caractérisé en ce que** le premier bras (1) présente deux parties (11, 12) en berceau formant le logement (111, 121) de la première extrémité (22) de la traverse (2).

7. Essieu souple selon l'une quelconque des revendications 1 à 6, **caractérisé en ce que** la traverse (2), excepté ses extrémités, présente une section génératrice (21) sensiblement en V.

8. Procédé d'assemblage d'un essieu comportant :
■ une traverse (2) présentant au moins une première extrémité (22),
■ au moins un premier bras (1) présentant plusieurs parties qui, réunies entre elles selon une première direction transversale à l'axe longitudinal de la traverse, définissent un logement de forme essentiellement complémentaire de celle de la première extrémité (22) de la traverse (2) qu'il reçoit,
ledit procédé comportant :
- une étape de positionnement lors de laquelle on positionne et on maintient une première partie dudit premier bras (1) définissant le logement ;
- une étape d'encollage lors de laquelle on enduit de colle la surface de ladite première partie dudit premier bras (1) positionné destinée à établir un contact avec ladite première extrémité (22) de la traverse (2) ;
- une étape durant laquelle on positionne ladite première extrémité (22) de la traverse (2) au contact de ladite première partie dudit premier bras (1) encollée ;
- une autre étape d'encollage lors de laquelle on enduit de colle la surface des autres parties dudit premier bras (1) qui définissent le logement de ladite première extrémité (22) de la traverse (2) ;
- une étape d'assemblage durant laquelle on positionne ensemble les parties dudit premier bras (1) qui définissent le logement ;
- une étape de serrage durant laquelle on serre les différentes parties dudit premier bras (1) qui définissent le logement contre ladite première extrémité (22) de la traverse (2).

9. Procédé d'assemblage selon la revendication 8, **caractérisé en ce que** l'on encolle également la première extrémité (22) de la traverse (2) avant assemblage.

10. Procédé d'assemblage selon l'une quelconque des revendications 8 à 9, **caractérisé en ce que** l'on vient poser en appui la première extrémité (22) de la traverse (2) sur la première partie du logement.

11. Procédé d'assemblage selon l'une quelconque des revendications 8 à 10, **caractérisé en ce que** l'on serre les différentes parties dudit premier bras (1) qui définissent le logement contre ladite première extrémité (22) de la traverse (2) grâce à des vis (3).

12. Procédé d'assemblage selon l'une quelconque des revendications 8 à 11, **caractérisé en ce que** l'on assemble la première extrémité (22) de la traverse (2) en même temps qu'une deuxième extrémité de la traverse (2).

13. Véhicule automobile **caractérisé en ce qu'**il comprend un essieu souple selon l'une quelconque des revendications 1 à 7.

## Patentansprüche

1. Flexible Achse, umfassend:
• mindestens einen ersten Arm (1), der geeignet ist, den Aufbau mit einer Radhalterung zu verbinden,
• eine Querstrebe (2), die mindestens ein erstes Ende (22) aufweist,
wobei der Arm (1) mehrere Teile aufweist, die entlang einer ersten quer zur Längsachse der Querstrebe verlaufenden Richtung miteinander verbunden eine Aufnahme definieren, deren Form der Form des ersten Endes (22) der Querstrebe (2), das sie aufnimmt, im Wesentlichen komplementär ist,
**dadurch gekennzeichnet, dass** das erste Ende (22) der Querstrebe (2) mit mindestens einem Teil des ersten Arms (1) verklebt ist.

2. Flexible Achse nach Anspruch 1, **dadurch gekennzeichnet, dass** das erste Ende (22) der Querstrebe (2) eine Form ohne Hinterschneidung aufweist.

3. Flexible Achse nach Anspruch 1 oder 2, **dadurch gekennzeichnet, dass** die Form des ersten Endes (22) der Querstrebe (2) im Wesentlichen länglich ist.

4. Flexible Achse nach einem der Ansprüche 1 bis 3, **dadurch gekennzeichnet, dass** die Teile des ersten Arms (1), die die Aufnahme definieren, durch Klemmelemente aneinander befestigt sind.

5. Flexible Achse nach einem der Ansprüche 1 bis 4, **dadurch gekennzeichnet, dass** die Teile des ersten Arms (1), die die Aufnahme definieren, durch Schrauben (3) aneinander befestigt sind.

6. Flexible Achse nach einem der vorhergehenden Ansprüche, **dadurch gekennzeichnet, dass** der erste Arm (1) zwei wiegenartige Teile (11, 12) aufweist, die die Aufnahme (111, 121) des ersten Endes (22) der Querstrebe (2) bilden.

7. Flexible Achse nach einem der Ansprüche 1 bis 6, **dadurch gekennzeichnet, dass** die Querstrebe (2), abgesehen von ihren Enden, einen im Wesentlichen V-förmigen Mantellinienschnitt (21) aufweist.

8. Verfahren zur Montage einer Achse, umfassend:
• eine Querstrebe (2), die mindestens ein erstes Ende (22) aufweist,
• mindestens einen ersten Arm (1), der mehrere Teile aufweist, die entlang einer ersten quer zur Längsachse der Querstrebe verlaufenden Richtung miteinander verbunden eine Aufnahme definieren, deren Form der Form des ersten Endes (22) der Querstrebe (2), das sie aufnimmt, im Wesentlichen komplementär ist,
wobei das Verfahren die folgenden Schritte umfasst:
- einen Positionierungsschritt, bei dem ein erster Teil des ersten Arms (1), der die Aufnahme definiert, positioniert und festgehalten wird,
- einen Klebstoffauftragungsschritt, bei dem die Oberfläche des ersten Teils des positionierten ersten Arms (1), die in Kontakt mit dem ersten Ende (22) der Querstrebe (2) kommen soll, mit Klebstoff überzogen wird,
- einen Schritt, bei dem das erste Ende (22) der Querstrebe (2) in Kontakt mit dem ersten Teil des mit Klebstoff überzogenen ersten Arms (1) positioniert wird,
- einen weiteren Klebstoffauftragungsschritt, bei dem die Oberfläche der anderen Teile des ersten Arms (1), die die Aufnahme des ersten Endes (22) der Querstrebe (2) definieren, mit Klebstoff überzogen wird,
- einen Montageschritt, bei dem die Teile des ersten Arms (1), die die Aufnahme definieren, zusammenpositioniert werden,
- einen Klemmschritt, bei dem die verschiedenen Teile des ersten Arms (1), die die Aufnahme definieren, gegen das erste Ende (22) der Querstrebe (2) geklemmt werden.

9. Montageverfahren nach Anspruch 8, **dadurch gekennzeichnet, dass** auch das erste Ende (22) der Querstrebe (2) vor der Montage mit Klebstoff überzogen wird.

10. Montageverfahren nach einem der Ansprüche 8 bis 9, **dadurch gekennzeichnet, dass** das erste Ende (22) der Querstrebe (2) am ersten Teil der Aufnahme zum Anliegen gebracht wird.

11. Montageverfahren nach einem der Ansprüche 8 bis 10, **dadurch gekennzeichnet, dass** die verschiedenen Teile des ersten Arms (1), die die Aufnahme definieren, mittels Schrauben (3) gegen das erste Ende (22) der Querstrebe (2) geklemmt werden.

12. Montageverfahren nach einem der Ansprüche 8 bis 11, **dadurch gekennzeichnet, dass** das erste Ende (22) der Querstrebe (2) gleichzeitig mit einem zweiten Ende der Querstrebe (2) montiert wird.

13. Kraftfahrzeug, **dadurch gekennzeichnet, dass** es eine flexible Achse nach einem der Ansprüche 1 bis 7 umfasst.

## Claims

1. Flexible axle comprising:
• at least one first arm (1), designed to connect the bodyshell to a wheel support,
• a crossmember (2) having at least one first end (22),
said arm (1) having several parts which, joined together in a first direction transverse to the longitudinal axis of the crossmember, define a housing of a shape that essentially complements that of said first end (22) of the crossmember (2) that it houses,
**characterized in that** the first end (22) of the crossmember (2) is bonded to at least part of said first arm (1).

2. Flexible axle according to Claim 1, **characterized in that** the first end (22) of the crossmember (2) has a shape without undercut.

3. Flexible axle according to either one of Claims 1 and 2, **characterized in that** the shape of the first end (22) of the crossmember (2) is substantially oblong.

4. Flexible axle according to any one of Claims 1 to 3, **characterized in that** the parts of said first arm (1) which define the housing are fixed together by clamping elements.

5. Flexible axle according to any one of Claims 1 to 4, **characterized in that** the parts of said first arm (1) which define the housing are fixed together by screws (3).

6. Flexible axle according to any one of the preceding claims, **characterized in that** the first arm (1) has two cradle-like parts (11, 12) forming the housing (111, 121) for the first end (22) of the crossmember (2).

7. Flexible axle according to any one of Claims 1 to 6, **characterized in that** the crossmember (2), with the exception of its ends, has a substantially V-shaped generatrix section (21).

8. Method of assembling an axle comprising:
• a crossmember (2) having at least one first end (22),
• at least one first arm (1) having several parts which, joined together in a first direction transverse to the longitudinal axis of the crossmember, define a housing the shape of which essentially complements that of the first end (22) of the crossmember (2) that it houses,
said method comprising:
- a positioning step during which a first part of said first arm (1) defining the housing is positioned and held in position;
- an adhesive application step during which the surface of said first part of said positioned first arm (1) that is intended to make contact with said first end (22) of the crossmember (2) is coated with adhesive;
- a step during which said first end (22) of the crossmember (2) is positioned on contact with said adhesive-coated first part of said first arm (1);
- another adhesive application step during which the surface of the other parts of said first arm (1) which define the housing for said first end (22) of the crossmember (2) is coated with adhesive;
- an assembly step during which the parts of said first arm (1) which define the housing are positioned together;
- a clamping step during which the various parts of said first arm (1) which define the housing are clamped against said first end (22) of the crossmember (2).

9. Method of assembly according to Claim 8, **characterized in that** the first end (22) of the crossmember (2) is also coated with adhesive prior to assembly.

10. Method of assembly according to either one of Claims 8 and 9, **characterized in that** the first end (22) of the crossmember (2) is placed resting against the first part of the housing.

11. Method of assembly according to any one of Claims 8 to 10, **characterized in that** the various parts of said first arm (1) which define the housing are clamped against said first end (22) of the crossmember (2) using screws (3).

12. Method of assembly according to any one of Claims 8 to 11, **characterized in that** the first end (22) of the crossmember (2) is assembled at the same time as a second end of the crossmember (2).

13. Motor vehicle, **characterized in that** it comprises a flexible axle according to any one of Claims 1 to 7.
